# EUROPEAN PATENT SPECIFICATION

(11) **EP 3 110 649 B1**
(45) Date of publication and mention of the grant of the patent: **20.01.2021**
(21) Application number: 15710850.7
(22) Date of filing: 02.03.2015
(51) Int. Cl.: B60K 26/02, B60W 30/18, B60W 50/08, B60W 20/00, B60W 50/16

(54) **HYBRID DRIVE SYSTEM**
HYBRIDANTRIEBSSYSTEM
SYSTÈME D'ENTRAÎNEMENT HYBRIDE

(30) Priority: 28.02.2014 GB 201403592
(43) Date of publication of application: 04.01.2017
(73) Proprietor: Bentley Motors Limited, Crewe, Cheshire CW1 3PL (GB)
(72) Inventor: O MEACHAIR, Deaglan, Nantwich Cheshire CW5 7DR (GB); CRUMPTON, Matthew, Nantwich Cheshire CW5 6RJ (GB)
(74) Representative: Wilson Gunn
(86) International application number: PCT/GB2015/050593
(87) International publication number: WO 2015/128677

(56) References cited:
- DE-A1-102006 045 824
- DE-A1-102007 011 739
- DE-A1-102009 031 369
- DE-A1-102009 045 512
- DE-A1-102010 039 375
- DE-A1-102011 104 395

## Description

### Technical Field of the Invention

The present invention relates to a hybrid drive system for vehicle, particularly an automobile, and to a vehicle including such a system.

### Background to the Invention

Existing hybrid drive systems for automobiles and other vehicles comprise an internal combustion engine, an electric drive motor and an electrical energy storage device, such as a battery or capacitor, which stores energy for operating the drive motor. Surplus energy generated by the internal combustion engine and energy recovered from braking the vehicle is stored by the storage device.

Hybrid drive systems help to save fuel and therefore reduce carbon emissions by enabling energy to be recovered when a vehicle is braked and reused later to propel the vehicle, enabling the internal combustion engine to be stopped when the vehicle can be propelled solely by the electric drive motor and allowing an internal combustion engine of lower power output to be used than would otherwise be the case.

Hybrid drive systems generally provide maximum fuel savings when a vehicle is driven smoothly without harsh acceleration or braking as this enables the maximum use of the hybrid system to recover and reuse energy. So, whilst hybrid drive systems can reduce fuel consumption, as well as enhance the performance, of high performance vehicles typical driving styles for such vehicles are not compatible with maximising the fuel saving capability of a hybrid drive system.

Embodiments of the present invention have been made in consideration of this problem.

DE102010039A discloses a hybrid drivetrain where an accelerator pedal is used to select between different driving modes, an increase in the gradient of the pedal force being provided at the switching point between modes. Above a threshold vehicle speed driving mode is no longer dependent on accelerator pedal travel.

DE102007011739A discloses a hybrid drive system where an accelerator pedal is used to select between different driving modes, an increase in the gradient of the pedal force being provided at the switching point between modes.

### Summary of the Invention

According to the present invention there is provided a hybrid drive system for a vehicle, the system comprising an internal combustion engine and a drive motor each operable to propel the vehicle, an energy storage device for storing energy to power the drive motor, a driver operable accelerator control moveable from a zero to a maximum position to control the drive system, an arrangement for increasing resistance to movement of the accelerator control at at least one selected position in its travel thereby to divide the travel of the control into two or more parts and a controller arranged to control the internal combustion engine and drive motor in dependence on the position of the driver's control wherein the controller is arranged to control the internal combustion engine and drive motor according to a respective different mode of operation when the accelerator control is in each part of its travel, the arrangement for increasing resistance to movement of the accelerator control is under the control of the controller and may be disengaged by the controller to allow for movement of the accelerator control throughout its range of travel without any temporary increase in resistance at one or more selected positions and the controller is arranged to control the internal combustion engine and drive motor according to a respective different mode of operation when the accelerator control is in each part of its travel only during acceleration of the vehicle from rest.

This arrangement allows the drive system to be provided with different modes of operation, some of which may limit the performance of the drive system in order to save fuel, and for a driver to select a desired mode of operation by moving the accelerator control to a selected part of its travel, determined by feeling an increase in resistance to movement of the control.

The modes of operation serve as launch modes, with the drive system reverting to a standard mode of operation after initial acceleration. When the accelerator control has been moved back in the direction of the zero position following an initial application to accelerate the vehicle from rest, or fully released to the zero position, the controller may control the drive motor and internal combustion engine according to a single mode of operation irrespective of the position of the accelerator control.

The controller reverts to implementing a launch control mode when the vehicle is brought to rest.

A driver's selectable launch mode control may be provided to enable the driver to select the modes of operation which may be implemented by the controller.

The drive motor may be an electric motor. The energy storage device may be an electric battery.

The driver operable accelerator control may be an accelerator pedal. The control may be resiliently biased towards the zero position. The effort required to move the control from its zero to maximum position against the resilient bias may increase substantially linearly with travel, ignoring the effect of the arrangement for temporarily increasing resistance to movement.

The arrangement for increasing resistance to movement of the accelerator control may be an actuator, such as a solenoid or other linear actuator. It may act to urge the control towards its zero position when the control reaches a selected point in its travel. Other arrangements could be used to provide for a temporary increase in resistance to movement, such as a detent mechanism.

The arrangement for increasing resistance to movement of the accelerator control may increase resistance at only one selected point in its travel in order to divide the travel into two parts and may increase resistance at only two selected points in its travel in order to divide the travel into three parts. The arrangement for increasing resistance to movement of the accelerator control may increase resistance at more than two selected points in its travel.

It is possible that the arrangement for increasing resistance to movement of the accelerator control may divide travel of the accelerator control into more parts than there are modes of operation, in which case the same mode of operation may be applied when the accelerator control is in different parts of its travel. For example where there are two available modes of operation and the travel of the accelerator control is divided into three parts one mode of operation may be applied when the accelerator pedal is in a first part of its travel, and the other mode applied when the accelerator control is in either of the other two parts of its travel.

In one mode of operation the controller may be arranged to propel the vehicle using only the drive motor, provided that there is sufficient energy stored in the energy storage device to do so, and when in another mode of operation the controller may be arranged to propel the vehicle using both the drive motor and the internal combustion engine. This enables a driver to drive or accelerate the vehicle using only the drive motor, if desired, by keeping the accelerator control in the part of its travel which corresponds to that mode.

In two available modes of operation the controller may be arranged to propel the vehicle using both the drive motor and the internal combustion engine but in one ofthose modes the controller may be arranged to limit the amount of power available from the internal combustion engine. This limitation may apply only when the speed of the vehicle is below a certain threshold. The mode where the output of the internal combustion engine is limited helps to save fuel and a driver may selectively accelerate the vehicle in this mode by keeping the accelerator control in the part of its travel which corresponds to that mode.

### Detailed Description of the Invention

In order that the invention may be more clearly understood embodiments thereof will now be described, by way of example only, with reference to the accompanying drawings, of which:

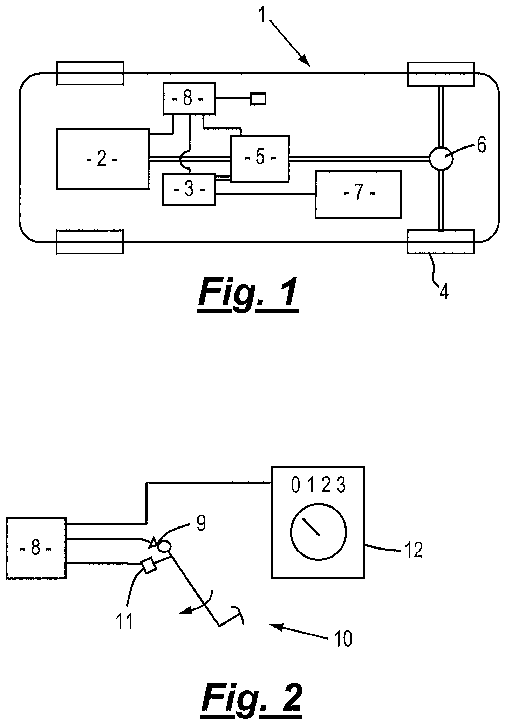

- Figure 1: is a schematic view of an automobile;
- Figure 2: is a schematic view of an accelerator pedal of the automobile of figure 1;
- Figure 3: is a graph illustrating effort against travel for the pedal of figure 2 in different modes of operation; and
- Figure 4: is a graph illustrating effort against travel for the pedal of figure 2 for an alternative embodiment.

Referring to the drawings, an automobile 1 is fitted with a hybrid drive system. This comprises an internal combustion engine 2 and an electric drive motor 3 each arranged to drive the rear road wheels 4 of the automobile via a gearbox 5 and differential 6. A rechargeable electric battery 7 is provided to supply power to the electric motor, and to store electrical power generated by employing the motor 3 as an electrical generator to absorb excess power from the internal combustion engine and regeneratively brake the automobile. Such hybrid drive systems are well known.

The internal combustion engine 2, electric motor 3 and gearbox 5 are all operatively connected to, and under the control of, a controller 8. The controller may be an electronic controller and may be programmable.

The controller is, in addition, operatively connected to a sensor 9 arranged to detect the position of a driver's accelerator pedal 10, an actuator 11, such as a solenoid, and a driver's launch mode selector 12.

As is conventional, the accelerator pedal is resiliently biased, such as by a spring, to an uppermost, zero, position. In use a driver depresses the accelerator pedal against the resilient bias in order to cause the drive system to propel the automobile. The position of the pedal is detected by the sensor 9 and communicated to the controller 8. The controller is arranged to control the drive system in dependence upon the extent to which the accelerator pedal 10 is depressed through its available travel. In common with current hybrid automobiles, the controller is arranged to control the internal combustion engine 2, electric motor 3 and gearbox 5 to provide for a smooth increase in the effort they provide to propel the automobile with increase in accelerator pedal travel, essentially to give a similar pedal response to that of a conventional automobile driven only by an internal combustion engine.

The control system is, in addition, configurable to control the operation of the drive system during acceleration of the automobile from rest according to driver selectable launch modes of operation, selected via the launch mode selector 12.

When the launch mode selector 12 is in the 0 position the drive system operates in a standard mode, without alteration to its operation when the vehicle is accelerated from rest.

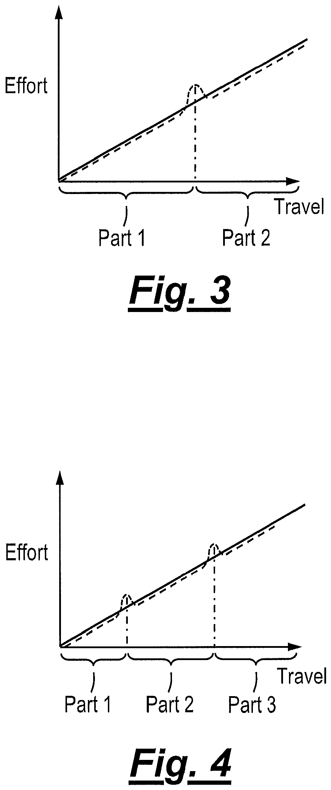

When the launch mode selector is in position 1 the controller implements a so-called "eco" launch mode which facilitates acceleration of the automobile from rest using only the electric drive motor. In this mode the controller 8 causes the actuator 11 to provide additional resistance to further depression of the accelerator pedal 10 beyond a point approximately mid way through the travel of the pedal 10. This is illustrated in figure 3 which shows the normal accelerator pedal effort profile as a sold line and the modified effort profile which applies when the system is operating in the eco launch mode as a broken line.

The normal accelerator pedal effort profile is generally linear with the force required to depress the pedal increasing in proportion to pedal travel. In eco launch mode, the profile is initially linear, over about the first half of the available travel, after which the effort required to further depress the pedal increases sharply before decreasing with further travel and returning to an extrapolation of its original profile. Thus a driver will feel additional resistance opposing further depression of the pedal as it reaches the midpoint of its available travel, but can push beyond this point, in which case the effort required reduces slightly and resumes its original profile. Introducing this point of increased resistance divides the accelerator pedal travel into two parts, a first part, up to and including the position where the force opposing further depression of the pedal reaches a first peak, following its sudden increase, and a second part beyond the first peak to maximum depression of the pedal. When the pedal is released it returns to its uppermost position under the action of the resilient bias. The actuator does not provide any resistance to upward movement of the pedal.

In the eco launch mode the controller 8 is also arranged so that when the accelerator pedal is depressed to a point in the first part of its travel only the electric motor 3 is employed to drive the automobile, subject to there being sufficient energy stored in the battery 7, and to make full power of the electric motor 3 available to the driver on depression of the accelerator pedal 10 to the end of the first part of its travel. If the accelerator pedal 10 is pushed into the second part of its travel, by pushing past the temporary increase in resistance provided by the actuator 11, the controller will deploy the internal combustion engine 2 to provide additional power to drive the automobile in accordance with the standard launch mode discussed below.

Thus, in this mode the driver can choose to employ only the electric motor to accelerate the automobile from rest by using feed back through the accelerator pedal to ensure that the pedal is only operated within the first part of its travel. This helps to save fuel. For example, when the automobile is being moved only a short distance, such as in stop start traffic or when manoeuvring, the electric motor 3 is all that is required to move the automobile and feedback through the accelerator pedal 10 helps the driver avoid unintentional use of the internal combustion engine. In other scenarios, where the automobile continues to be driven such that the internal combustion engine will eventually need to be started because the energy stored in the battery will fall below a minimum threshold level the eco mode enables the driver to exploit maximum acceleration available from the electric motor before the internal combustion engine starts, this also reduces use of the internal combustion engine.

When initial acceleration of the automobile is completed, signalled by release or partial release of the accelerator pedal, the controller 8 reverts to the standard operating mode until the automobile is brought to rest, when the eco launch mode is implemented again.

When the launch mode selector 12 is in the 2 position the controller 8 implements a so called "standard launch mode". In this mode the controller is configured to employ both the electric motor 3 and internal combustion engine 2 to accelerate the automobile from rest, and to provide for a temporary increase in pedal resistance as shown by the broken line in figure 3. When the accelerator pedal is in the first part of it travel the controller 8 is arranged to limit the available power from the internal combustion engine 2 during initial acceleration so that this is provided mainly by the electric motor 3. As the automobile gains speed the controller 8 is arranged to progressively increase the amount of power available from the internal combustion engine 2. This helps to best exploit characteristics of the internal combustion engine 2 and electric motor 3. Electric motors generally provide maximum or near maximum torque from rest, and an internal combustion engine is not able to deliver maximum torque until the automobile is moving above a certain speed. Reducing the effort provided by the internal combustion engine until the speed of the automobile has passed a certain predetermined threshold reduces fuel consumption with limited effect on automobile performance.

If the accelerator pedal is pushed into the second part of its travel whilst the controller 8 is implementing the standard launch mode the controller 8 will operate according to the max launch mode discussed below.

As with the eco launch mode, in the standard launch mode the controller 8 is arranged to make maximum power of the electric motor available when the accelerator pedal is pushed to the limit of the first part of its travel, the controller will revert to a standard mode of operation when the accelerator pedal is partially or fully released and revert to the standard launch mode when the automobile comes to rest.

When the launch mode selector is in the 3 position a so-called "max" launch mode is provided. In this mode the controller 8 is arranged to provide maximum available acceleration utilising both the electric motor 3 and internal combustion engine 2, when the accelerator pedal is fully depressed, and provides a normal accelerator pedal effort profile as shown by the solid line in figure 3.

In an alternative embodiment, the driver is only able to select between enabling or disenabling a launch mode. When the launch mode is enabled the controller 8 is configured to provide two, spaced apart, increases in the accelerator pedal effort profile at positions approximately one third and two thirds along the available travel of the pedal from its zero position. This divides the pedal travel into three parts as illustrated in figure 4 in which the effort profile is shown by a broken line and a standard linear profile by a solid line. In the first part of pedal travel, up to the first peak in required effort, the controller 8 operates according to the eco mode described above, and deploys only the electric motor (provided that sufficient energy is stored in the battery). In the second part of travel, beyond the first peak in pedal effort required and up to the second peak, the controller implements the standard launch mode discussed above additionally providing power from the internal combustion engine, but limited until the speed of the automobile passes a certain threshold, and beyond the third peak the controller operates in the max launch mode.

Provision of various launch modes enables a driver to save fuel whilst being able to enjoy accelerating the automobile at the maximum rate allowed for by the selected mode. Provision of feedback through the accelerator pedal is a convenient way to allow the driver to select between modes. It also provides for safety in automobile operation as it is possible to switch from a restrictive to a less restrictive mode by pushing the pedal past a point of increased resistance and so an instinctive additional pressure on the accelerator pedal, for example to accelerate the automobile out of danger, will cause the automobile to operate in a less restrictive mode allowing for additional acceleration. Of course, the system may be applied to vehicles other than automobiles.

The above embodiments are described by way of example only. Many variations are possible without departing from the scope of the invention as defined in the appended claims.

## Claims

1. A hybrid drive system for a vehicle (1), the system comprising an internal combustion engine (2) and a drive motor (3) each operable to propel the vehicle, an energy storage device (7) for storing energy to power the drive motor, a driver operable accelerator control (10) moveable from a zero to a maximum position to control the drive system, an arrangement (11) for increasing resistance to movement of the accelerator control at at least one selected position in its travel thereby to divide the travel of the control into two or more parts and a controller (8) arranged to control the internal combustion engine and drive motor in dependence on the position of the driver's control wherein the controller is arranged to control the internal combustion engine and drive motor according to a respective different mode of operation when the accelerator control is in each part of its travel, the arrangement for increasing resistance to movement of the accelerator control is under the control of the controller and may be disengaged by the controller to allow for movement of the accelerator control throughout its range of travel without any temporary increase in resistance at one or more selected positions and **characterised in that** the controller is arranged to control the internal combustion engine and drive motor according to a respective different mode of operation when the accelerator control is in each part of its travel only during acceleration of the vehicle from rest.

2. A hybrid drive system as claimed in claim 1 wherein the drive motor is an electric motor and the energy storage device is an electric battery.

3. A hybrid drive system as claimed in claim 1 or 2 wherein the driver operable accelerator control is an accelerator pedal which is resiliently biased towards the zero position.

4. A hybrid drive system as claimed in claim 3 wherein the force required to move the accelerator pedal against the resilient bias increases generally linearly with movement of the pedal through its travel.

5. A hybrid drive system as claimed in any preceding claim wherein the arrangement for increasing resistance to movement of the accelerator control is an actuator.

6. A hybrid drive system as claimed in any preceding claim wherein the arrangement for increasing resistance to movement of the accelerator control increases resistance at one selected point in its travel in order to divide the travel into two parts.

7. A hybrid drive system as claimed in of claims 1 to 5 wherein the arrangement for increasing resistance to movement of the accelerator control increases resistance at two selected points in its travel in order to divide the travel into three parts.

8. A hybrid drive system as claimed in any preceding claim wherein, when in one mode of operation the controller is arranged to propel the vehicle using only the drive motor, provided that there is sufficient energy stored in the energy storage device to do so, and when in another mode of operation the controller is arranged to propel the vehicle using both the drive motor and the internal combustion engine.

9. A hybrid drive system as claimed in any preceding claim wherein, in two available modes of operation the controller is arranged to propel the vehicle using both the drive motor and the internal combustion engine but in one of those modes the controller is arranged to limit the amount of power available from the internal combustion engine.

10. A hybrid drive system as claimed in claim 9 wherein the controller is arranged to limit the output of the internal combustion engine only when the speed of the vehicle is below a certain threshold.

11. A hybrid drive system as claimed in any preceding claim wherein, once the accelerator control has been moved back in the direction of the zero position following an initial acceleration of the vehicle from rest, the controller controls the drive motor and internal combustion engine according to a single mode of operation irrespective of the position of the accelerator control.

12. A hybrid drive system as claimed in any preceding claim comprising a driver's selectable launch mode control which enables the driver to select the modes of operation which may be implemented by the controller.

13. A vehicle comprising a hybrid drive system as claimed in any preceding claim.

14. An automobile comprising a hybrid drive system as claimed in any preceding claim.

## Patentansprüche

1. Ein Hybridantriebssystem für ein Fahrzeug (1), das System umfassend einen Verbrennungsmotor (2) und einen Antriebsmotor (3), die jeweils zum Antreiben des Fahrzeugs betreibbar sind, eine Energiespeichervorrichtung (7) zur Speicherung von Energie zum Versorgen des Antriebsmotors, eine durch den Fahrer betreibbare Beschleunigerkontrolle (10), die von einer Null- in eine Maximalposition zur Kontrolle des Antriebssystems bewegbar ist, eine Anordnung (11) zur Erhöhung des Bewegungswiderstands der Beschleunigungskontrolle an mindestens einer ausgewählten Position in ihrem Hub, wodurch der Hub der Kontrolle in zwei oder mehr Teile aufgeteilt wird, und einen Controller (8), der angeordnet ist, um den internen Verbrennungsmotor und Antriebsmotor in Abhängigkeit von der Position der Kontrolle des Fahrers zu kontrollieren, wobei der Controller so angeordnet ist, dass er den Verbrennungsmotor und den Antriebsmotor entsprechend eines jeweils verschiedenen Betriebsmodus kontrolliert, wenn sich die Beschleunigungskontrolle in jedem Teil ihres Hubs befindet, wobei die Anordnung zur Erhöhung des Bewegungswiderstands der Beschleunigungskontrolle der Kontrolle des Controllers unterliegt und durch den Controller getrennt werden kann, um eine Bewegung der Beschleunigungskontrolle über den gesamten Hubbereich ohne zeitweise Erhöhung des Widerstands an einer oder mehreren ausgewählten Positionen zu erlauben, und **dadurch gekennzeichnet, dass** der Controller so angeordnet ist, dass er den Antriebsmotor und den Verbrennungsmotor entsprechend verschiedener Betriebsmodi kontrolliert, wenn, nur während der Beschleunigung des Fahrzeugs aus der Ruhe, die Beschleunigungskontrolle in jedem Teil ihres Hubs ist.

2. Hybridantriebssystem nach Anspruch 1, wobei der Antriebsmotor ein Elektromotor und die Energiespeichervorrichtung eine elektrische Batterie ist.

3. Hybridantriebssystem nach Anspruch 1 oder 2, wobei die vom Fahrer betreibbare Beschleunigungskontrolle ein Beschleunigungspedal ist, das elastisch in Richtung der Nullposition vorgespannt ist.

4. Hybridantriebssystem nach Anspruch 3, wobei die Kraft, die erforderlich ist, um das Beschleunigungspedal gegen die elastische Vorspannung zu bewegen, sich im Allgemeinen linear mit der Bewegung des Pedals durch seinen Hub erhöht.

5. Hybridantriebssystem nach einem der vorhergehenden Ansprüche, wobei die Anordnung zur Erhöhung des Bewegungswiderstands der Beschleunigungskontrolle ein Aktuator ist.

6. Hybridantriebssystem nach einem der vorhergehenden Ansprüche, wobei die Anordnung zur Erhöhung des Bewegungswiderstands der Beschleunigungskontrolle den Widerstand an einem ausgewählten Punkt ihres Hubs erhöht, um den Hub in zwei Teile zu teilen.

7. Hybridantriebssystem nach Anspruch 1 bis 5, wobei die Anordnung zur Erhöhung des Bewegungswiderstands der Beschleunigungskontrolle den Widerstand an zwei ausgewählten Punkten ihres Hubs erhöht, um den Hub in drei Teile zu teilen.

8. Hybridantriebssystem nach einem der vorhergehenden Ansprüche, wobei wenn in einem Betriebsmodus der Controller so angeordnet ist, dass er das Fahrzeug nur unter Verwendung des Antriebsmotors antreibt, vorausgesetzt, dass in der Energiespeichervorrichtung ausreichend Energie gespeichert ist, um dies zu tun, und wenn der Controller in einem anderen Betriebsmodus so angeordnet, dass er das Fahrzeug unter Verwendung sowohl des Antriebsmotors als auch des Verbrennungsmotors antreibt.

9. Hybridantriebssystem nach einem der vorhergehenden Ansprüche, wobei in zwei verfügbaren Betriebsmodi der Controller so angeordnet ist, dass er das Fahrzeug sowohl unter Verwendung des Antriebsmotors als auch des Verbrennungsmotors antreibt, aber in einem dieser Modi der Controller so angeordnet ist, dass er die Menge der aus dem Verbrennungsmotor verfügbaren Leistung begrenzt.

10. Hybridantriebssystem nach Anspruch 9, wobei der Controller so angeordnet ist, dass er die Ausgabe des Verbrennungsmotors nur begrenzt, wenn die Geschwindigkeit des Fahrzeugs unter einem bestimmten Schwellenwert liegt.

11. Hybridantriebssystem nach einem der vorhergehenden Ansprüche, wobei, sobald die Beschleunigungskontrolle, einer anfänglichen Beschleunigung des Fahrzeugs aus der Ruhe folgend, in Richtung der Nullposition zurückbewegt wurde, der Controller den Antriebsmotor und den Verbrennungsmotor gemäß eines einzigen Betriebsmodus unabhängig von der Position der Beschleunigungskontrolle kontrolliert.

12. Hybridantriebssystem nach einem der vorhergehenden Ansprüche, umfassend eine vom Fahrer wählbare Startmoduskontrolle, die es dem Fahrer ermöglicht, die Betriebsmodi auszuwählen, die von dem Controller implementiert werden können.

13. Ein Fahrzeug, umfassend ein Hybridantriebssystem nach einem der vorhergehenden Ansprüche.

14. Ein Automobil, umfassend ein Hybridantriebssystem nach einem der vorhergehenden Ansprüche.

## Revendications

1. Système d'entraînement hybride d'un véhicule (1), le système comprenant un moteur (2) à combustion interne et un moteur (3) d'entraînement pouvant fonctionner chacun pour propulser le véhicule, un dispositif (7) d'accumulation d'énergie pour accumuler de l'énergie afin d'alimenter le moteur d'entraînement, une commande (10) d'accélérateur pouvant fonctionner par un conducteur et mobile d'une position zéro à une position maximum pour commander le système d'entraînement, un agencement (11) pour augmenter la résistance au déplacement de la commande d'accélérateur à au moins une position sélectionnée dans sa course, en subdivisant ainsi la course de la commande en deux ou plusieurs parties, et une unité (8) de commande agencée pour commander le moteur à combustion interne et le moteur d'entraînement en fonction de la position de la commande du conducteur, l'unité de commande étant agencée pour commander le moteur à combustion interne et le moteur d'entraînement suivant un mode de fonctionnement respectif différent lorsque la commande de l'accélérateur est dans chaque partie de sa course, l'agencement pour augmenter la résistance au déplacement de la commande d'accélérateur étant sous la commande de l'unité de commande et pouvant être désenclencher par l'unité de commande pour permettre le déplacement de la commande d'accélérateur dans toute sa course sans augmentation temporaire de la résistance à une ou plusieurs positions sélectionnées et caractérise l'unité de commande est agencée pour commander le moteur à combustion interne et le moteur d'entraînement suivant un mode de fonctionnement respectif différent lorsque la commande d'accélérateur est dans chaque partie de sa course seulement pendant une accélération du véhicule à partir du repos.

2. Système d'entraînement hybride suivant la revendication 1, dans lequel le moteur d'entraînement est un moteur électrique et le dispositif d'accumulation d'énergie est une batterie électrique.

3. Système d'entraînement hybride suivant l'une des revendications 1 ou 2, dans lequel la commande d'accélérateur pouvant fonctionner par un conducteur est une pédale d'accélérateur, qui tend élastiquement vers la position zéro.

4. Système d'entraînement hybride suivant la revendication 3, dans lequel la force requise pour déplacer la pédale d'accélérateur contre la tendance élastique augmente linéairement avec le déplacement de la pédale dans sa course.

5. Système d'entraînement hybride suivant l'une quelconque des revendications précédentes, dans lequel l'agencement d'augmentation de la résistance au déplacement de la commande d'accélérateur est un actionneur.

6. Système d'entraînement hybride suivant l'une quelconque des revendications précédentes, dans lequel l'agencement d'augmentation de la résistance au déplacement de la commande d'accélérateur augmente la résistance à un point sélectionné de sa course afin de subdiviser la course en deux parties.

7. Système d'entraînement hybride suivant l'une quelconque des revendications 1 à 5, dans lequel l'agencement d'augmentation de la résistance au déplacement de la commande d'accélérateur augmente la résistance en deux points sélectionnés dans sa course, afin de subdiviser la course en trois parties.

8. Système d'entraînement hybride suivant l'une quelconque des revendications précédentes, dans lequel, dans un mode de fonctionnement, l'unité de commande est agencée pour propulser le véhicule en utilisant seulement le moteur d'entraînement pourvu qu'il y ait suffisamment d'énergie accumulée dans le dispositif d'accumulation d'énergie pour le faire et, dans lequel, dans un autre mode de fonctionnement, l'unité de commande est agencée pour propulser le véhicule en utilisant à la fois le moteur d'entraînement et le moteur à combustion interne.

9. Système d'entraînement hybride suivant l'une quelconque des revendications précédentes, dans lequel dans deux modes de fonctionnement disponibles, l'unité de commande est agencée pour propulser le véhicule en utilisant à la fois le moteur d'entraînement et le moteur à combustion interne mais, dans l'un de ces modes, l'unité de commande est agencée pour limiter la quantité de puissance disponible du moteur à combustion interne.

10. Système d'entraînement hybride suivant la revendication 9, dans lequel l'unité de commande est agencée pour limiter la puissance de sortie du moteur à combustion interne seulement lorsque la vitesse du véhicule est en dessous d'un certain seuil.

11. Système d'entraînement hybride suivant l'une quelconque des revendications précédentes, dans lequel une fois que la commande d'accélérateur est revenue dans la direction de la position zéro à la suite d'une accélération initiale du véhicule à partir du repos, l'unité de commande commande le moteur d'entraînement et le moteur à combustion interne suivant un mode unique de fonctionnement quelle que soit la position de la commande d'accélérateur.

12. Système d'entraînement hybride suivant l'une quelconque des revendications précédentes, comprenant une commande de mode de lancement pouvant être sélectionnée par le conducteur, qui permet au conducteur de sélectionner les modes de fonctionnement qui peuvent être mis en œuvre par l'unité de commande.

13. Véhicule comprenant un système d'entraînement hybride tel que revendiqué dans l'une quelconque des revendications précédentes.

14. Automobile comprenant un système d'entraînement hybride suivant l'une des revendications précédentes.
